# NEUE EUROPÄISCHE PATENTSCHRIFT

(11) **EP 2 923 807 B2**
(45) Veröffentlichungstag und Bekanntmachung des Hinweises auf die Entscheidung über den Einspruch: **14.08.2019**
(45) Hinweis auf die Patenterteilung: 30.11.2016
(21) Anmeldenummer: 15166438.0
(22) Anmeldetag: 05.01.2010
(51) Int. Cl.: G01N 1/02, G01N 1/08, G01N 1/22, G01N 1/44, G01V 3/15, F41H 7/03

(54) **FAHRZEUG MIT EINER SPÜRVORRICHTUNG FÜR BODENSPÜRUNGEN AUS DEM INNEREN DIESES FAHRZEUGS**
TRACK DEVICE FOR GROUND TRACKS FROM THE INTERIOR OF A VEHICLE AND VEHICLE WITH SUCH A TRACK DEVICE
DISPOSITIF DE TRAÇAGE DE MARQUES AU SOL À PARTIR DE L'INTÉRIEUR D'UN VÉHICULE ET VÉHICULE ÉQUIPÉ D'UN TEL PROCÉDÉ DE TRAÇAGE AU SOL

(30) Priorität: 01.04.2009 DE 102009015828
(43) Veröffentlichungstag der Anmeldung: 30.09.2015
(62) Teilanmeldung aus: 10705530.3
(73) Patentinhaber: Krauss-Maffei Wegmann GmbH & Co. KG, 80997 München (DE)
(72) Erfinder: Schneider, Lars, 34127 Kassel (DE); Wagner, Hartmut, 34127 Kassel (DE)
(74) Vertreter: Feder Walter Ebert

(56) Entgegenhaltungen:
- EP-A1- 1 329 148
- EP-A1- 1 972 964
- EP-A1- 1 972 964
- EP-A2- 0 364 687
- EP-A2- 0 982 471
- EP-A2- 1 006 347
- EP-A2- 2 221 573
- WO-A1-96/01360
- CN-A- 101 126 754
- CN-Y- 201 107 310
- DE-A1- 3 904 105
- DE-A1- 3 904 105
- DE-A1-102005 029 980
- DE-B3-102005 022 433
- DE-C1- 4 238 399
- DE-C1- 19 606 630
- DE-C1- 19 712 420
- DE-C2- 4 421 644
- DE-T2- 69 837 485
- DE-U1- 8 424 372
- DE-U1- 8 424 372
- DE-U1- 9 100 367
- DE-U1- 9 100 367
- DE-U1- 29 604 341
- DE-U1- 29 910 714
- JP-A- 2002 131 309
- US-A- 2 378 440
- US-A- 2 378 440
- US-A- 3 406 765
- US-A- 3 418 572
- US-A- 3 418 572
- US-A- 3 464 504
- US-A- 3 593 809
- US-A- 4 285 485
- US-A- 4 285 485
- US-A- 4 685 339
- US-A- 4 982 616
- US-A- 5 076 372
- US-A- 5 121 643
- US-A- 5 121 643
- US-A- 5 394 949
- US-A- 5 950 741
- US-A- 6 016 713
- US-B1- 6 260 633
- US-B1- 6 260 633
- US-B1- 6 360 829
- US-B1- 6 363 803
- US-B1- 6 363 803

## Beschreibung

Die Erfindung betrifft ein Fahrzeug mit einer Spürvorrichtung für Bodenspürungen aus dem Inneren des Fahrzeugs mit einer mit dem Boden in Kontakt bringbaren Spürsonde, die einen Spürkopf aufweist, der ein Heizelement zum Verdampfen einer Bodenprobe umfasst, und einer Handhabe zur Bewegung der Spürsonde von einer Ruhestellung in eine abgesenkte Bodenspürstellung.

Spürvorrichtungen für Bodenspürungen werden bei insbesondere militärischen Spürfahrzeugen eingesetzt, um beispielsweise Schad- und Kampfstoffe im Erdboden und somit in der Umgebung nachweisen zu können. Die Bodenprobe kann hierbei in fester Form mittels eines Greiferarms oder in verdampfter Form aufgenommen und analysiert werden.

Eine bekanntes Spürfahrzeug mit einem zangenartigen Greiferarm beschreibt beispielsweise die DE 91 00 367 U1. Zum Aufnehmen von Bodenproben befindet sich im Heckbereich eine Probennahmevorrichtung, in der verschiedene Geräte wie eine Zange angeordnet sind. Mittels der Zange können die Bodenproben von dem Boden aufgenommen werden und in einem Probennahmebehälter untergebracht werden, welcher dann verschlossen und gefahrlos zu einem Labor transportiert werden kann. Ferner weist das Spürfahrzeug eine Doppelradspüreinrichtung mit einem Massenspektrometer auf. Beim Spüren mit dem bekannten Massenspektrometer ist es erforderlich, während der Fahrt mit Hilfe der Doppelradspüreinrichtung eventuelle Kontaminationen, die sich auf dem Boden abgelagert haben, mit Hilfe eines auf dem Spürrad befindlichen Silikonschlauches zu übertragen und zur Detektion an das Massenspektrometer weiterzuleiten. Ein Doppelradspürgerät zum Feststellen von Kampfstoffen wird auch in der der DE 84 24 372 U1 beschrieben.

Weiterhin ist es bei dem militärischen Spürpanzer des Types "Fuchs" bekannt, über eine als Spürlanze ausgestaltete Spürvorrichtung im Heckbereich des Fahrzeugs eine Bodenanalyse vorzunehmen. Hierzu existiert eine manuell bedienbare Spürsonde, die aus dem Inneren des geschützten Fahrzeugs heraus bedienbar ist. Der Spürer hat hier ein langes Rohr, welches durch die heckseitige Fahrzeugwand geführt wird. Über einen kurzen Griff als Handhabe an einem Ende der Spürsonde kann der Spürer die Spürsonde positionieren und die für die Durchführung der Bodenanalyse erforderliche Andruckkraft aufbringen. Am anderen Ende der Spürsonde ist ein Spürkopf angeordnet, welcher ein Heizelement beinhaltet, so dass die Bodenprobe verdampfen kann. Diese Bodendämpfe werden dann durch die rohrförmige Spürlanze in das Innere des Fahrzeugs zu einer Analyseeinrichtung geführt.

US4982616 A zeigt eine Vorrichtung zur Probennahme für Überwachungsfahrzeuge, mit einem eine Kontaktfläche aufweisenden beweglichen Sammelkörper, dem Eingangskopf eines Analysegerätes, einer Einrichtung zum Absenken und Anheben des Sammelkörpers, mit der der Sammelkörper mit seiner Kontaktfläche wahlweise an dem das Fahrzeug tragenden Boden oder an dem Eingangskopf zur Anlage bringbar ist, und mit Mitteln zum Auswechseln des Sammelkörpers.

US6363803 B1 offenbart ein Fahrzeug mit einer Sonde zur Entnahme von Bodenproben.

Nachteilig am Stand der Technik ist, dass aufgrund des langen Rohres eine Bedienung nicht ergonomisch durchführbar ist. Ferner muss eine große Kraft aufgewendet zu werden, um den für die Durchführung der Bodenspürung nötigen Anpressdruck zu erreichen. Auf Grund der Konstruktion muss die Anordnung im geräumigeren Heck erfolgen, wo zudem über einen Glassichtblock in der Heckwand der Spürvorgang beobachtbar ist.

Die Erfindung hat die Aufgabe, ein Fahrzeug mit einer Spürvorrichtung derart auszugestalten, dass eine günstige Bedienbarkeit für den Spürer erreicht wird.

Die Erfindung löst die Aufgabe mit den Merkmalen aus dem Patentanspruch 1. Vorteilhafte Ausgestaltungen sind Bestandteil der abhängigen Ansprüche.

Erfindungsgemäß ist die Spürsonde durch den Boden des Fahrzeuginnenraums geführt. Es ergeben sich geringere Absenkwege und eine verbesserte Ergonomie.

Bei einer vorteilhaften Ausgestaltung ist die Spürsonde mit der Handhabe derart gekoppelt, dass sich bei Betätigung der Handhabe die Spürsonde unter Hebelwirkung in die Bodenspürstellung absenkt. Durch die Hebelwirkung kann die Krafteinleitung zur Erreichung der nötigen Andruckkraft wesentlich verbessert werden. Bei einer bevorzugten Ausgestaltung ist die Handhabe hierbei wippenförmig ausgestaltet. Hierdurch wird eine einfache Konstruktion der Handhabe zur Erreichung einer Hebelwirkung erreicht. Bevorzugt ist die Handhabe schwenkbeweglich, insbesondere über ein Kugelgelenk, mit der Spürsonde gekoppelt. Hierdurch kann erreicht werden, dass trotz der Hebelwirkung ein nahezu senkrechtes Absenken der Spürsonde erreicht wird. Die Absenkung kann somit unter Hebelkraft erfolgen.

Zur Erreichung einer Hebelwirkung umfasst die Handhabe bevorzugt einen Hebel und ein Hebellager. Bei einer besonders vorteilhaften Ausgestaltung umfasst die Handhabe einen Einhandzughebel, der über das Hebellager gelagert ist. Mittels des Einhandzughebels kann eine ergonomisch günstige Ausgestaltung der Handhabe erreicht werden.

Bei einer bevorzugten Ausgestaltung ist das Hebellager über eine Stützlagervorrichtung mit dem Fahrzeug verbindbar. Die Stützlagervorrichtung kann hierbei derart ausgestaltet sein, dass zum Ausrichten der Spürsonde Schwenkbewegungen der Spürsonde um eine im Wesentlichen horizontale Schwenkebene durchführbar sind. Somit kann die Spürsonde um einen in der Schwenkebene liegenden Schwenkpunkt geschwenkt werden. Bei einer rohr- oder stabförmigen Ausgestaltung der Spürsonde kann die Schwenkebene im Wesentlichen senkrecht zur Rohr- oder Stabachse liegen. Durch diese seitlichen Ausrichtbewegungen kann der Spürer eine für die Bodenspürung geeignete Stelle innerhalb eines Spürbereiches aufsuchen, ohne dass das Fahrzeug Rangierbewegungen durchführen muss.

Insbesondere kann die Stützlagervorrichtung hierzu ein Drehlager mit insbesondere im Wesentlichen vertikaler Drehachse umfassen. Zudem kann die Stützlagervorrichtung eine insbesondere im Wesentlichen horizontale Linearführung umfassen. Durch die Kombination von Drehlager und horizontaler Linearführung lässt sich ein großer Ausrichtbereich für die Spürsonde erreichen.

Bei einer vorteilhaften Ausgestaltung ist die Spürvorrichtung derart ausgestaltet, dass die Absenkbewegung der Spürsonde mittels einer Absenkarretierung arretierbar ist. Durch die Absenkarretierung ergibt sich eine günstige Bedienbarkeit für den Spürer, da verschiedene Absenkstellungen definiert festsetzbar sind. Die Absenkarretierung kann hierbei ein Lochblende umfassen, in die ein mit der Handhabe verbundener Bolzen, der relativ zur Lochblende bewegbar ist, zur Arretierung eingreift.

Bevorzugt ist die Absenkarretierung mittels einer an der Handhabe angeordneten Absenkfreigabebetätigung freigebbar. Hierdurch kann die Einhandbedienung der Spürvorrichtung unterstützt werden. Bevorzugt ist die Spürsonde in der Ruhestellung und/oder in der Bodenspürstellung arretierbar.

Ferner kann die Spürsonde zwischen der Ruhestellung und der Bodenspürstellung auch in einer Luftspürstellung und/oder einer Kopfwechselstellung arretierbar sein. Bei einer Luftspürstellung ist der Spürkopf nicht mit dem Boden in Kontakt. Es wird über den Spürkopf eine Probe der Umgebungsluft entnommen und in das Fahrzeug zu einer Analyseeinrichtung geleitet. In der Kopfwechselstellung ist der Spürkopf ebenfalls nicht mit dem Boden in Kontakt. Sie lässt allerdings ein einfaches Auswechseln zu, welches beispielsweise dann erforderlich ist, wenn eine Kontaminierung festgestellt worden ist.

Durch die definierten arretierten Positionen der Spürsonde kann zudem ein Sensor Einsatz finden, welcher die Ruhestellung, die Bodenspürstellung, die Luftspürstellung und/oder die Kopfwechselstellung sensiert. Eine einfache Ausgestaltung kann sich ergeben, wenn der Sensor unmittelbar an der Absenkarretierung angeordnet ist und so die einzelnen arretierten Positionen sensiert. Durch die Sensierung können dem Spürer und auch einem Fahrer des Spürfahrzeuges verschiedene Stellungen der Spürsonde angezeigt werden. Zudem kann beispielsweise mittels einer Steuereinrichtung verhindert werden, dass das Fahrzeug losfährt, wenn sich die Spürsonde in der Bodenstellung befindet, so dass eine Unfall- und Beschädigungsgefahr verringert wird.

Bei einer vorteilhaften Ausgestaltung ist die Spürvorrichtung derart ausgestaltet, dass mittels der Handhabe die Spürsonde zum Ausrichten in eine im Wesentlichen horizontale Schwenkebene schwenkbar ist, wobei mittels einer Ausrichtarretierung die Ausrichtung arretierbar ist. Somit kann die Spürsonde um einen in der Schwenkebene liegenden Schwenkpunkt, insbesondere kugelgelenkig geschwenkt werden. Bei einer rohr- oder stabförmigen Ausgestaltung der Spürsonde kann die Schwenkebene im Wesentlichen senkrecht zur Rohr- oder Stabachse liegen. Die Vorteile einer ausrichtbaren Spürsonde wurden bereits beschrieben.

Über die Ausrichtarretierung kann die Ausrichtung arretiert werden, so dass nach einmal erfolgter Ausrichtung mittels der Ausrichtarretierung keine weiteren seitlichen Ausrichtbewegungen zugelassen werden, so dass dann die einmal ausgerichtete Spürsonde lediglich noch in die Bodenspürstellung abgesenkt werden muss.

Bevorzugt ist die Ausrichtarretierung mittels einer an der Handhabe angeordneten Ausricht-Freigabebetätigung freigebbar. Hierdurch wird wiederum die Einhandbedienbarkeit der Spürvorrichtung unterstützt.

Ein erfindungsgemäßes Fahrzeug mit einer bereits beschriebenen Spürvorrichtung ist derart ausgestaltet, dass die Spürsonde durch den Fahrzeuginnenboden geführt ist. Dadurch dass die Spürsonde nun nicht mehr durch eine heckseitige Wand des Fahrzeugs geführt ist, ergeben sich geringere Absenkwege. Ferner kann die Ergonomie derart verbessert werden, dass eine nahezu senkrechte Absenkbewegung erreichbar ist. Die Spürsonde kann hierbei über eine Kugeldurchführung mit dem Fahrzeug verbunden sein. Über die Kugeldurchführung werden in Verbindung mit der Kugelgelenklagerung der Spürsonde in der Handhabe die Schwenkbewegungen zum Ausrichten der Spürsonde und axiale Bewegungen zum Absenken und Anheben der Spürsonde zugelassen.

Bevorzugt umfasst die Spürsonde einen Rohrabschnitt, an dessen einem Ende ein Spürkopf angeordnet ist. Ferner kann unterhalb des Fahrzeugs ein Schacht angeordnet sein, durch den die Spürsonde geführt ist. Zudem kann der Spürkopf in der Ruhestellung in dem Schacht, der vorzugsweise verschließbar ist, angeordnet sein, so dass sich eine geschützte Ruhestellung des Spürkopfes ergibt.

Da die Spürvorrichtung insbesondere in militärischen Fahrzeugen eingesetzt wird, die im Regelfalle über einen besonderen Minenschutz verfügen, wird es nicht möglich sein, den unterhalb des Fahrzeugs stattfindenden Bodenspürvorgang aus dem Inneren des Fahrzeugs heraus unmittelbar zu verfolgen. Aus diesem Grund kann unter dem Fahrzeug eine Kamera angeordnet sein, mittels derer der Spürvorgang über ein Anzeigegerät beobachtbar ist.

Erfindungsgemäß umfasst der Spürkopf ein Heizelement zum Verdampfen einer Bodenprobe. Insbesondere sind hierbei die Bodendämpfe durch die Spürsonde, insbesondere durch den Rohrabschnitt in eine Analysevorrichtung im Fahrzeug zuleitbar.

Die ergonomische Ausgestaltung des Fahrzeugs kann ferner dadurch unterstützt werden, dass im Innenraum des Fahrzeugs ein Arbeitsplatz eines Spürers angeordnet ist, wobei die Handhabe im Greifraum des Spürers angeordnet ist. Hierdurch wird vermieden, dass der Spürer zum Bodenspüren seinen Sitz verlassen und sich ins Fahrzeugheck begeben muss. Somit kann die Erfindung auch in Fahrzeugen mit kleinem Fahrzeuginnenraum Einsatz finden.

Bevorzugt ist mittels eines Sensors eine Bodenspürstellung sensierbar, wobei der Sensor mit einer Steuereinrichtung verbunden ist, die bei Sensierung der Bodenspürstellung ein Anfahren des Fahrzeug verhindert.

Sämtliche vorgestellten Ausgestaltungen können miteinander kombiniert werden.

Eine bevorzugte Ausgestaltung der Erfindung wird anhand der Fig. 1 bis 14 beschrieben. Es zeigen:
- Fig. 1: ein Fahrzeug mit einer Spürvorrichtung in der Ruhestellung im Längsquerschnitt;
- Fig. 2: das Fahrzeug gemäß Fig. 1 mit teilweise transparenten Elementen;
- Fig. 3: das Fahrzeug gemäß Fig. 2 mit der Spürvorrichtung in der Luftspürstellung;
- Fig. 4: das Fahrzeug gemäß Fig. 3 mit der Spürvorrichtung in der Bodenspürstellung;
- Fig. 5: den fahrzeuginnenseitigen Teil der Spürvorrichtung gemäß Fig. 1 in einer perspektivischen Darstellung;
- Fig. 6: der Teil der Spürvorrichtung gemäß Fig. 5 mit teilweise weggelassenen Elementen;
- Fig. 7: den Arbeitsplatz eines Spürers in dem Fahrzeug gemäß Fig. 1 in der Draufsicht;
- Fig. 8: das Fahrzeug gemäß Fig. 4 zur Erläuterung des Ausrichtbereiches;
- Fig. 9: das Fahrzeug gemäß Fig. 8 mit nach hinten ausgerichteter Spürsonde;
- Fig. 10: das Fahrzeug gemäß Fig. 8 mit nach vorne ausgerichteter Spürsonde;
- Fig. 11: eine querseitige Schnittdarstellung des Fahrzeugs gemäß Fig. 1;
- Fig. 12: das Fahrzeug gemäß Fig. 11 zur Erläuterung des Ausrichtbereiches
- Fig. 13: eine vergrößerte Darstellung der Handhabe gemäß Fig. 6; und
- Fig. 14: eine vergrößerte querseitige Schnittdarstellung der Spürvorrichtung nach Fig. 1.

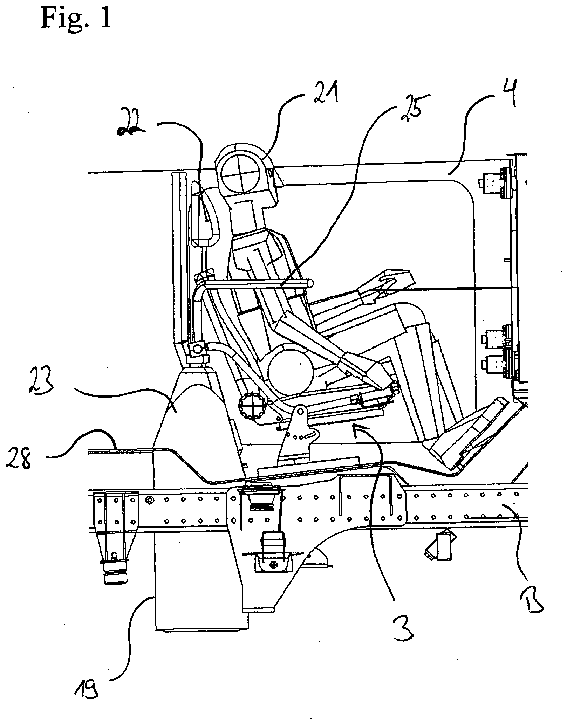

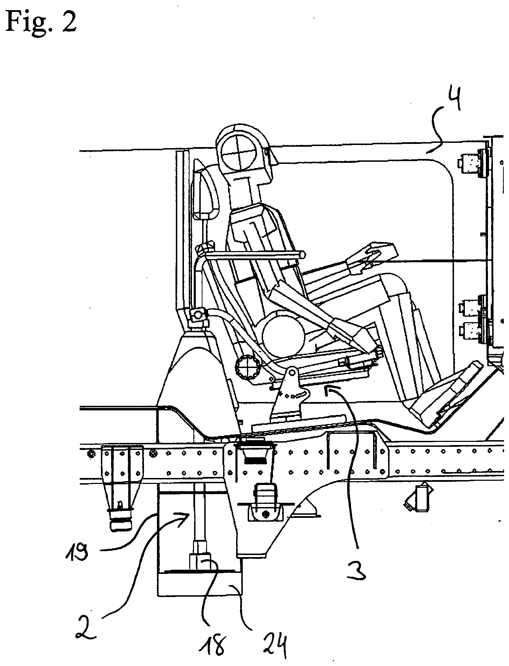

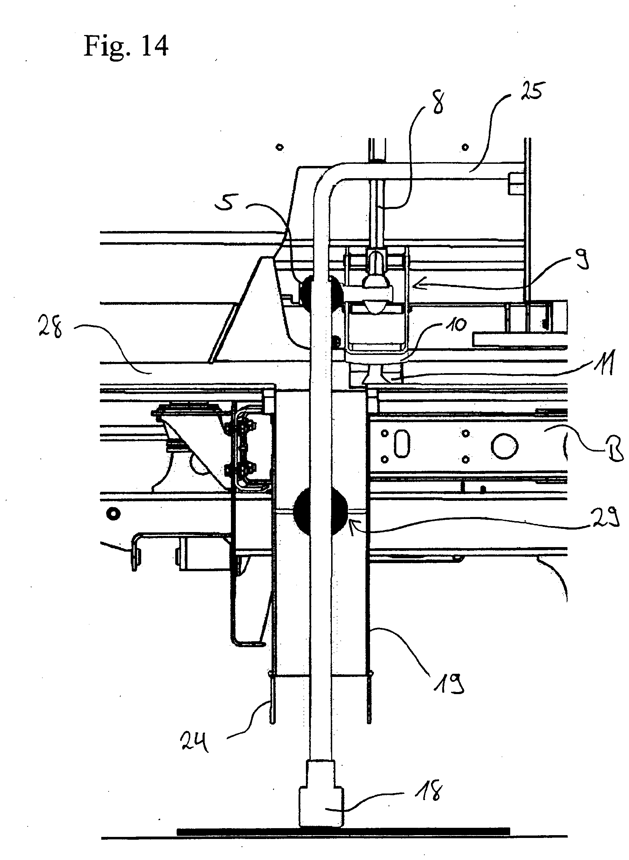

Die Fig. 1 und 2 zeigen ein militärisches Fahrzeug 4, welches als Spürfahrzeug Spüraufgaben übernehmen kann. Hierzu ist ein Arbeitsplatz eines Spürers 21 im Innenraum des Fahrzeugs 4 vorgesehen. Das Fahrzeug 4 verfügt über eine Spürvorrichtung 1, die eine Spürsonde 2 und eine manuell betätigbare Handhabe 3 umfasst. Die Spürsonde 2 weist einen Rohrabschnitt 17 auf, der über eine in Fig. 14 dargestellte Lagerplatte mit Kugeldurchführung 29 durch einen Fahrzeuginnenboden 28 und den Boden B des Fahrzeugs 4 geführt ist.

Gemäß der Fig. 1 und 2 befindet sich die Spürvorrichtung 1 und die Spürsonde 2 in einer Ruhestellung. In der Ruhestellung befindet sich der Spürkopf 18, der an einem Ende des Rohrabschnittes 17 angeordnet ist, gut geschützt vollständig innerhalb des unter dem Fahrzeugboden B befindlichen Schachtes 19, der in Fig. 2 transparent dargestellt ist. Gemäß Fig. 1 ist der Schacht über eine Klappenvorrichtung 24, die manuell oder motorisch betätigbar ist, verschlossen, gemäß Fig. 2 ist die Klappenvorrichtung 24 geöffnet. Die Spürsonde 2 kann zum Zwecke des Minenschutzes eine nicht dargestellte Sollbruchstelle aufweisen.

Der Spürkopf 18 umfasst in nicht dargestellter Weise ein Heizelement zum Verdampfen von Bodenproben. Die Bodenprobendämpfe werden durch den Rohrabschnitt 17 über ein Wellrohr 25 im Inneren des Fahrzeugs 4 zu einer nicht weiter dargestellten Analysevorrichtung gesaugt.

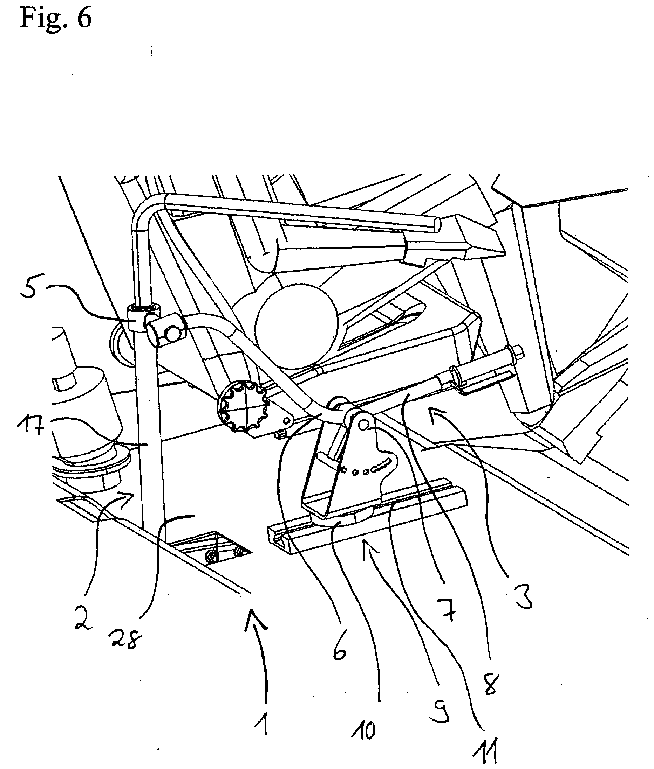

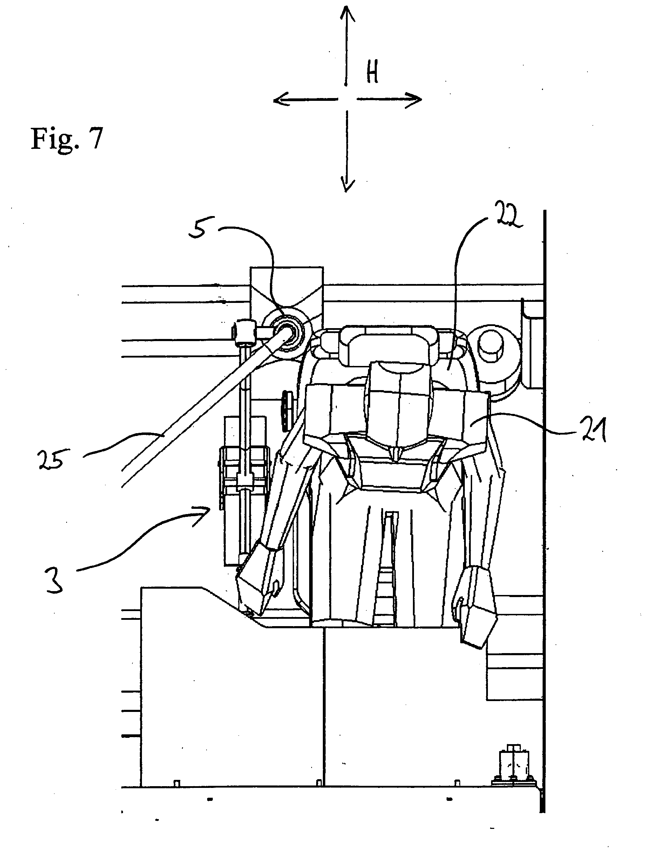

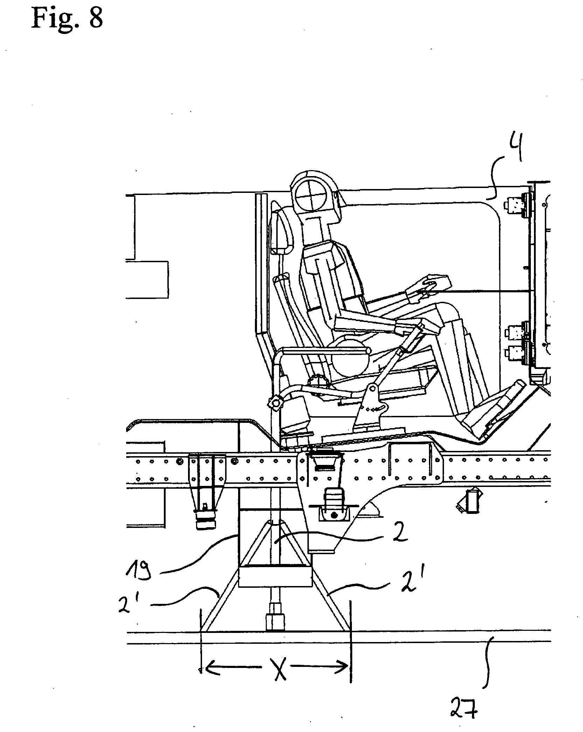

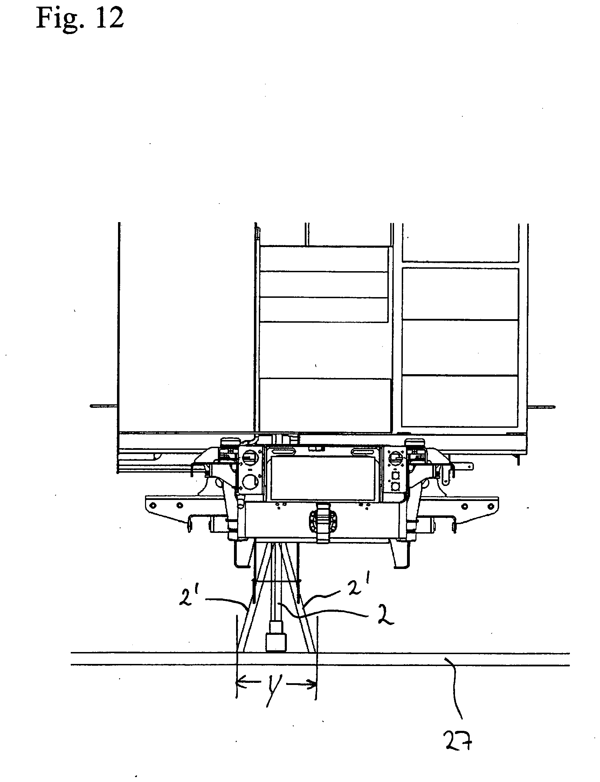

Mittels der Handhabe 3 kann der Spürer 21 die Spürsonde 2 ausrichten und absenken. Hierzu ist die Handhabe 3 wippenförmig ausgestaltet. Sie umfasst gemäß Fig. 6 einen Einhandzughebel 8, der über ein Hebellager 7 und eine Stützlagervorrichtung 9 mit dem Fahrzeuginnenboden 28 verbunden ist. Durch Zug an dem Einhandzughebel 8 senkt sich die Spürsonde 2 nach unten ab. Die Handhabe 3 ist hierbei über ein Kugelgelenk 5 mit Durchführung schwenkbeweglich mit der Spürsonde 2 gekoppelt, so dass die Hebelbewegung der Handhabe 3 in eine im Wesentlichen senkrechte Absenkbewegung überführt wird. Durch das Kugelgelenk 5 kann die Spürsonde 2 um eine im Wesentlichen horizontale Schwenkebene H (Fig. 7) geschwenkt werden, so dass Ausrichtungen X (Fig. 8) und Y (Fig. 12) der Spürsonde 2 und des Spürkopfes 18 erreichbar sind. Das Kugelgelenk 5 stellt somit den in der horizontalen Ebene H liegenden Schwenkpunkt dar.

Das Hebellager 7 ist als Lagerbock ausgestaltet und umfasst eine im Wesentlichen horizontale Drehachse. Das Hebellager 7 wiederum ist über eine Stützlagervorrichtung 9 mit dem Fahrzeuginnenboden 28 verbunden. Die Stützlagervorrichtung 9 umfasst hierbei zum einen ein Drehlager 10 mit einer im Wesentlichen senkrecht zum Fahrzeuginnenboden 28 und somit im Wesentlichen vertikal verlaufenden Drehachse. Über das Drehlager 10 können Schwenkbewegungen der Handhabe 3 durchgeführt werden, so dass eine Ausrichtbewegung der Spürlanze 2 insbesondere in seitlicher Richtung möglich wird. Die Stützlagervorrichtung 9 umfasst ferner eine Linearführung 11, durch die eine im Wesentlichen parallel zum Fahrzeuginnenboden 28 und somit im Wesentlichen horizontal verlaufende Linearbewegung der Handhabe 3 ausgeführt werden kann, wodurch eine Ausrichtbewegung der Spürsonde 2 in Längsrichtung des Fahrzeugs erreicht wird. Über die Stützlagervorrichtung 9 sind somit ausrichtende Schwenkbewegungen der Spürsonde 2 um eine im Wesentlichen parallel zum Fahrzeuginnenboden 28 und somit im Wesentlichen horizontal verlaufende Schwenkebene mittels der Handhabe 3 durchführbar.

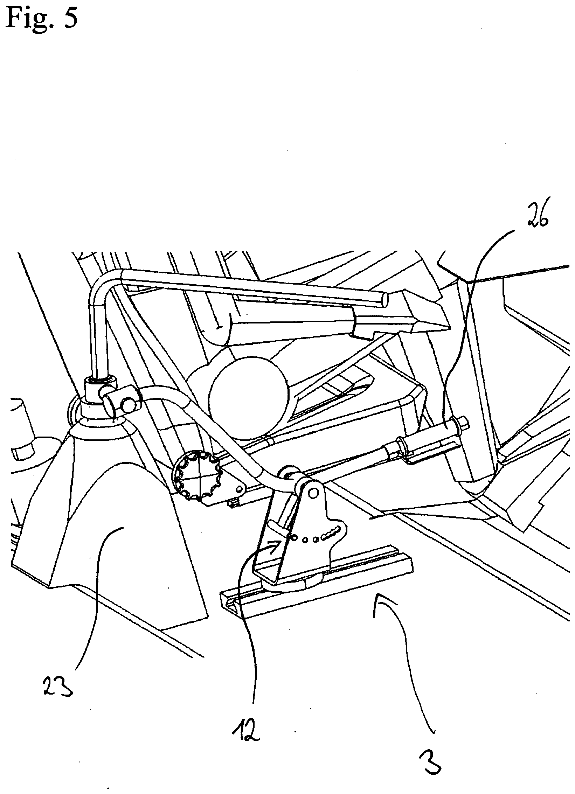

Um zu vermeiden, dass möglicherweise kontaminierte Umgebungsluft in den Fahrzeuginnenraum gelangt, ist die Durchführung der Spürsonde 2 gemäß Fig. 5 durch den Fahrzeuginnenboden 28 und den Boden B über einen Gummibalg 23 abgedichtet, der derart flexibel ausgestaltet ist, dass er Ausricht- und Absenkbewegungen der Spürsonde 2 zulässt.

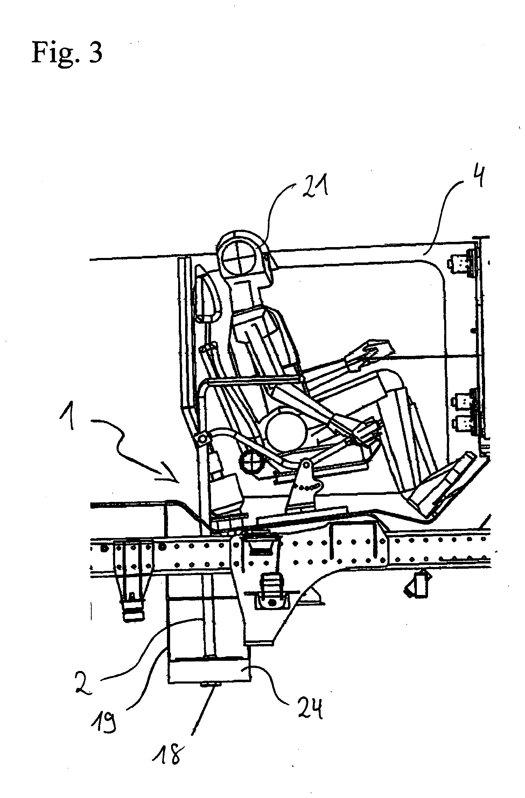

Die Fig. 3 zeigt die Spürvorrichtung 1 mit der Spürsonde 2 in einer Luftspürstellung. Diese wird eingenommen, wenn Proben der Umgebungsluft zur Analyse eingenommen werden sollen. In der Luftspürstellung schaut der Spürkopf 18 bei geöffneten Klappen 24 nur so viel wie nötig aus dem Schacht 19 heraus, so dass die Bodenfreiheit des Fahrzeugs nicht unnötig verringert wird. Somit kann die Luftspürung auch beim Fahren des Fahrzeugs 4 durchgeführt werden.

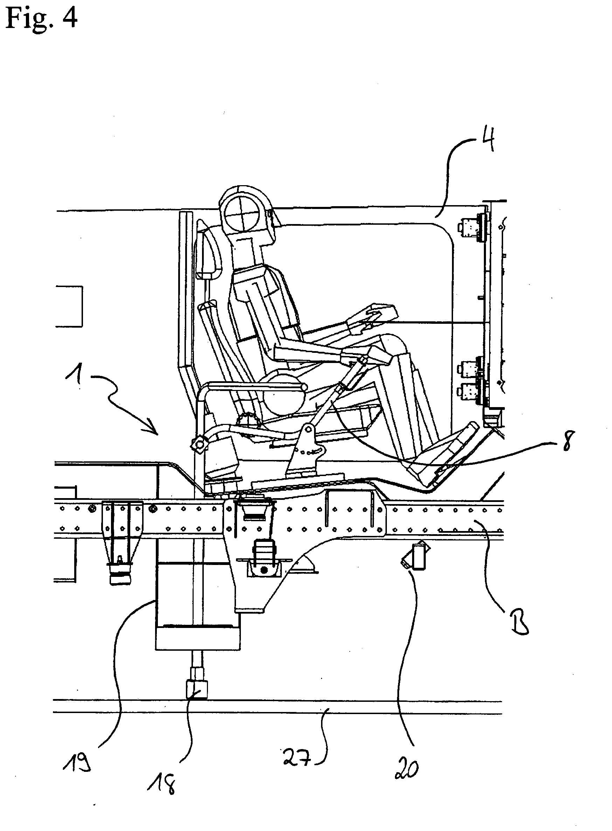

Die Fig. 4 zeigt die Spürvorrichtung 1 in der Bodenspürstellung. Hierzu wird die Spürsonde 2 durch Zug an dem Einhandzughebel 8 unter Hebelwirkung gegen den Erdboden 27 gepresst, so dass eine Bodenprobe verdampfen und eingesaugt werden kann.

Die Fig. 7 zeigt den Arbeitsraum des Spürers 21 in einer Draufsicht. Die Handhabe 3 liegt neben dem Sitz 22 des Spürers in dessen Greifraum. Die Anordnung der Handhabe neben dem Sitz 22 ist somit vergleichbar einer Anordnung, wie sie bei Feststellbremsen (Handbremse) bei Personenkraftwagen bekannt ist.

Die Fig. 8 zeigt den schematisch dargestellten erreichbaren Ausrichtbereich X der Spürsonde 2 in Längsrichtung des Fahrzeugs 4, wobei die maximal erreichbaren Stellungen der Spürsonde 2' dargestellt sind.

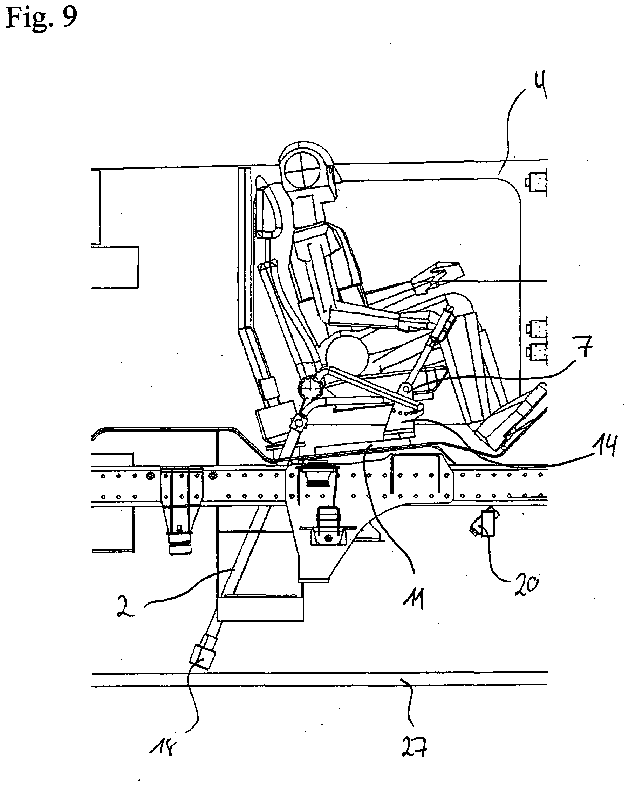

Die Fig. 9 zeigt das Fahrzeug 4 in einer Stellung der Spürvorrichtung 1, in der die Spürsonde 2 nach hinten hin ausgerichtet ist. Hierzu ist das Hebellager 7 mit dem Lagerbock umfassend die Lochblende 14 auf der Linearführung 11 bis zu einem Anschlag nach vorne hin verschoben worden.

Unter dem Fahrzeug ist eine Kamera 20 angeordnet, mittels derer der Ausrichtvorgang und der anschließende Spürvorgang über einen nicht weiter dargestellten Monitor im Inneren des Fahrzeug 4 beobachtbar ist.

In nicht dargestellter Weise ist der Spürkopf 18 an der Spürsonde 2 über ein Knickgelenk verbunden, da der Spürkopf 18 bei der Bodenspürung notwendigerweise senkrecht zum Boden stehen muss. Das Knickgelenk kann hierbei federbelastet ausgestaltet sein. Der Spürer 21 muss durch Aufbringung eines entsprechend hohen Anpressdruckes gewährleisten, dass tatsächlich eine senkrechte Stellung des Spürkopfes am Erdboden 27 erreicht ist.

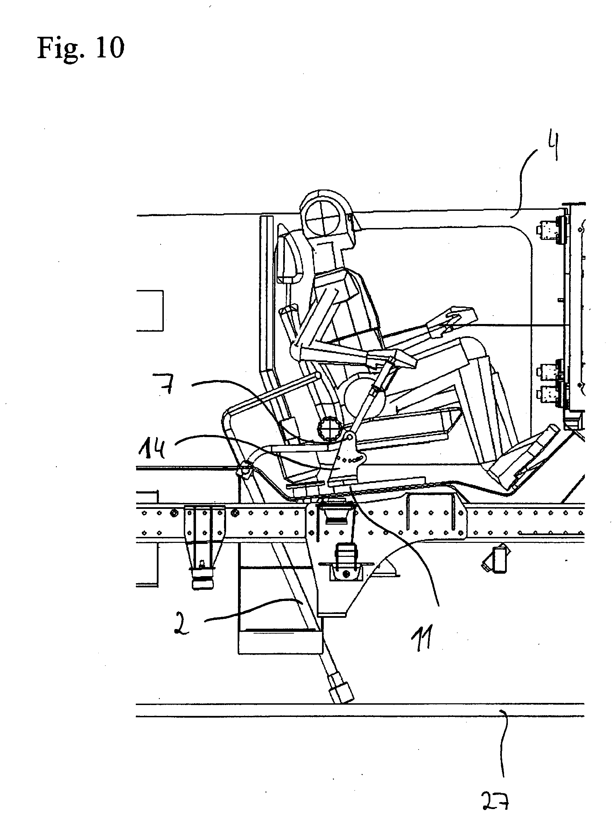

Die Fig. 10 zeigt die entsprechende Stellung mit nach vorne hin ausgerichteter Spürsonde 2. Hierzu ist das Hebellager 7 mit dem Lagerbock umfassend die Lochblende 14 auf der Linearführung 11 bis zu einem Anschlag nach hinten hin verschoben worden.

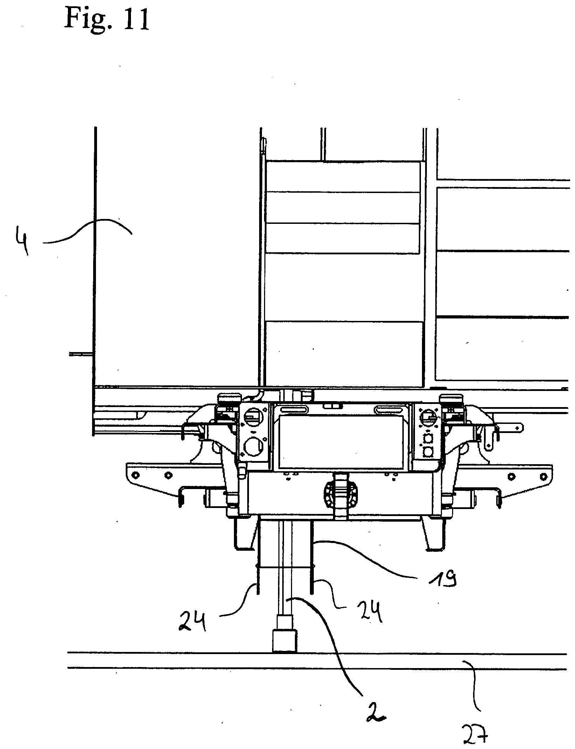

Die Fig. 11 zeigt das Fahrzeug 4 in einer rückseitigen Ansicht mit geöffneten Verschlussklappen 24 und der Spürsonde 2 in der Bodenspürstellung.

Die Fig. 12 zeigt den seitlichen Ausrichtbereich Y der Spürsonde 2, wobei die maximal erreichbaren Stellungen der Spürsonde 2' dargestellt sind. Insgesamt ergibt sich ein von dem Spürkopf abtastbarer Bodenbereich (X, Y) von ca. 1 m².

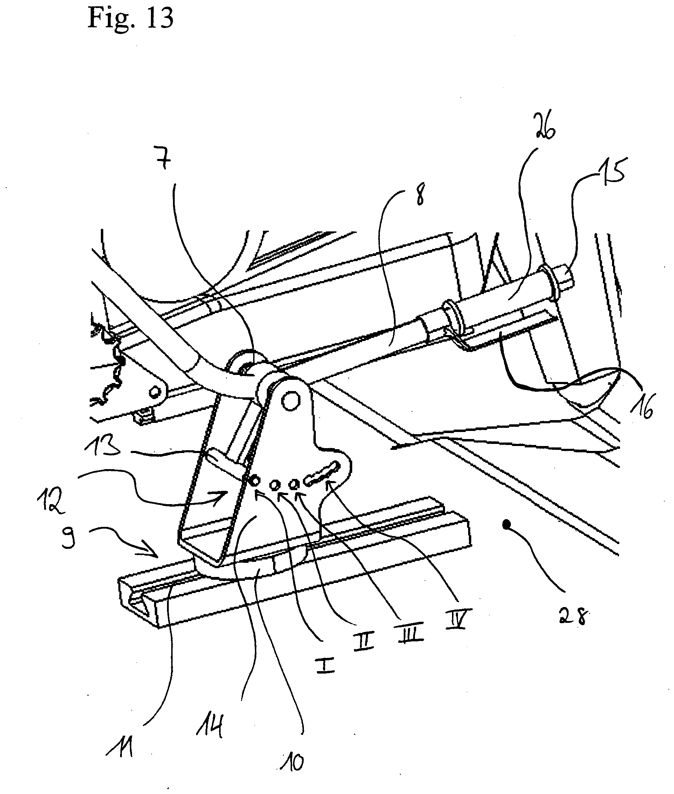

Die Fig. 13 zeigt eine vergrößerte Darstellung der Handhabe 3, bei der im Bereich des Hebellagers 7 eine Absenkarretierung 12 vorgesehen ist. Das Hebellager 7, welches als gabelförmige Lochplattenvorrichtung 14 ausgestaltet ist, wirkt zur Arretierung mit einem Bolzen 13 zusammen, der in verschiedene Ausnehmungen der Lochplatte 14 eingreifen kann. Der Bolzen 13 kann über einen Bowdenzug und die Absenkfreigabebetätigung 15, welche als Druckknopf für den Daumen ausgestaltet ist, freigegeben werden.

Die verschiedenen Löcher der Lochplatte 14 sind verschiedenen vorgegebenen Stellungen der Spürsonde 2 zugeordnet. Die Ausnehmung I stellt hierbei die Ruhestellung dar. Die Ausnehmung II stellt die Luftspürstellung dar. Die Ausnehmung III stellt die Kopfwechselstellung dar, die zwischen der Luftspürstellung und der Bodenspürstellung liegt. Das gekerbte Langloch IV stellt den Schwenkbereich für die Bodenspürstellung dar und dient zum Höhenausgleich. Über eine feine Teilung der Kerben kann mittels des Bolzens 13, der an den Enden wie eine Sperrklinke ausgeführt ist und in die Kerben des Langlochs eingreift, eine bestimmte Bodenspürstellung arretiert werden. In nicht dargestellter Weise könnte alternativ über eine Reibpaarung auch die Bodenspürstellung stufenlos arretiert werden. In beiden Ausführungen kann der Spürer 21 während des Spürvorgangs die Handhabe 3 loslassen.

In nicht dargestellter Weise kann an dem Bolzen 13 oder an der Lochplatte 14 eine Sensorik angeordnet sein, die den Eingriff des Bolzens 13 und dadurch die Stellung der Spürsonde 2 sensiert, so dass eine Signalerzeugung in Abhängigkeit vom Sondenstatus stattfindet. Die entsprechenden Signale können dem Spürer oder dem Fahrer des Fahrzeugs 4 beispielsweise optisch oder akustisch mitgeteilt werden. Zudem kann über eine nicht dargestellte Steuereinrichtung eine Fahrverblockung vorgesehen werden, die ein Anfahren verhindert, wenn sich die Spürvorrichtung in der Bodenspürstellung befindet.

Die Handhabe 3 weist zudem eine nicht weiter dargestellte Ausrichtarretierung auf. Die Ausrichtarretierung kann über die Ausrichtfreigabebetätigung 16, welche als Zughebel ausgestaltet ist, gelöst werden. Bei gelöster Ausrichtfreigabebetätigung sind eine Drehbewegung des Drehlagers 10 sowie eine Linearbewegung der horizontalen Linearführung 11 möglich. Bei unbetätigter Ausrichtfreigabebetätigung ist eine Ausrichtbewegung gesperrt, eine Drehbewegung des Drehlagers 10 sowie eine Linearbewegung über die Linearführung 11 sind nicht möglich.

Die Ausrichtfreigabebetätigung 16 und die Absenkfreigabebetätigung 15 sind im Bereich des Griffes 26 des Einhandzughebels 8 angeordnet, so dass die gesamte Handhabe 3 , die im Greifraum des Spürers 21 neben dessen Sitz 22 angeordnet ist, mit nur einer Hand ergonomisch günstig bedienbar ist.

### Bezugszeichenliste:

- 1: Spürvorrichtung
- 2: Spürsonde
- 3: Handhabe
- 4: Fahrzeug
- 5: Kugelgelenk
- 6: Drehlager
- 7: Hebellager
- 8: Hebel
- 9: Stützlagervorrichtung
- 10: Drehlager
- 11: Linearführung
- 12: Absenkarretierung
- 13: Bolzen
- 14: Lochplatte
- 15: Absenkfreigabebetätigung
- 16: Ausrichtfreigabebetätigung
- 17: Rohrabschnitt
- 18: Spürkopf
- 19: Schacht
- 20: Kamera
- 21: Spürer
- 22: Sitz
- 23: Gummibalg
- 24: Klappe
- 25: Wellrohr
- 26: Griff
- 27: Erdboden
- 28: Fahrzeuginnenboden
- 29: Lagerplatte mit Kugeldurchführung

- I: Ruhestellung
- II: Luftspürstellung
- III: Kopfwechselstellung
- IV: Bodenspürstellungen

- B: Fahrzeugboden
- H: horizontale Schwenkebene
- X: Ausrichtbereich in Längsrichtung des Fahrzeugs
- Y: Ausrichtbereich in Querrichtung des Fahrzeugs

## Patentansprüche

1. Fahrzeug (4) mit einer Spürvorrichtung (1) für Bodenspürungen aus dem Inneren des Fahrzeugs (4), mit einer mit dem Boden in Kontakt bringbaren Spürsonde (2), die einen Spürkopf (18) aufweist, der ein Heizelement zum Verdampfen einer Bodenprobe umfasst,
**dadurch gekennzeichnet,**
**dass** das Fahrzeug (4) eine Handhabe (3) zur Bewegung der Spürsonde (2) von einer Ruhestellung in eine abgesenkte Bodenspürstellung aufweist, dass der Spürkopf (18) mit dem Boden in Kontakt bringbar ist und dass die Spürsonde (2) durch den Boden (28) des Fahrzeuginnenraums geführt ist.

2. Fahrzeug nach Anspruch 1,
**dadurch gekennzeichnet,**
**dass** die Spürsonde (2) mit der Handhabe (3) derart gekoppelt ist, dass sich bei Betätigung der Handhabe (3) die Spürsonde (2) unter Hebelwirkung in die Bodenspürstellung absenkt.

3. Fahrzeug nach Anspruch 1 oder 2, **dadurch gekennzeichnet, dass** die Handhabe (3) wippenförmig ausgestaltet ist.

4. Fahrzeug nach einem der vorhergehenden Ansprüche, **dadurch gekennzeichnet, dass** die Handhabe (3) schwenkbeweglich, insbesondere über ein Kugelgelenk (5), mit der Spürsonde (2) gekoppelt ist.

5. Fahrzeug nach einem der vorhergehenden Ansprüche, **dadurch gekennzeichnet, dass** die Handhabe (3) einen Hebel (6, 8) und ein Hebellager (7) umfasst.

6. Fahrzeug nach Anspruch 5, **dadurch gekennzeichnet, dass** die Handhabe (3) einen Einhand-Zughebel (8) umfasst.

7. Fahrzeug nach Anspruch 5 oder 6, **dadurch gekennzeichnet, dass** das Hebellager (7) über eine Stützlagervorrichtung (9) mit dem Fahrzeug verbindbar ist.

8. Fahrzeug nach Anspruch 7, **dadurch gekennzeichnet, dass** die Stützlagervorrichtung (9) derart ausgestaltet ist, dass zum Ausrichten der Spürsonde (2) Schwenkbewegungen der Spürsonde (2) um eine im Wesentlichen horizontale Schwenkebene durchführbar sind.

9. Fahrzeug nach Anspruch 8, **dadurch gekennzeichnet, dass** die Stützlagervorrichtung (9) ein Drehlager (10) mit insbesondere im Wesentlichen vertikaler Drehachse umfasst.

10. Fahrzeug nach Anspruch 8 oder 9, **dadurch gekennzeichnet, dass** die Stützlagervorrichtung (9) eine insbesondere im Wesentlichen horizontale Linearführung (11) umfasst.

11. Fahrzeug nach einem der vorhergehenden Ansprüche,
**dadurch gekennzeichnet,**
**dass** die Absenkbewegung der Spürsonde (2) mittels einer Absenkarretierung (12) arretierbar ist.

12. Fahrzeug nach Anspruch 11, **dadurch gekennzeichnet, dass** die Absenkarretierung (12) eine Lochblende (14) umfasst, in die ein mit der Handhabe (3) verbundener Bolzen (13) zur Arretierung eingreift.

13. Fahrzeug nach Anspruch 11 oder 12, **dadurch gekennzeichnet, dass** die Absenkarretierung (12) mittels einer an der Handhabe (3) angeordneten Absenkfreigabebetätigung (15) freigebbar ist.

14. Fahrzeug nach einem der vorhergehenden Ansprüche, **dadurch gekennzeichnet, dass** die Ruhestellung und/oder die Bodenspürstellung und/oder die Luftspürstellung und/oder die Kopfwechselstellung mittels eines Sensors sensierbar sind.

15. Fahrzeug nach einem der vorhergehenden Ansprüche,
**dadurch gekennzeichnet,**
**dass** mittels der Handhabe (3) die Spürsonde (2) zum Ausrichten um eine im Wesentlichen horizontale Schwenkebene schwenkbar ist, wobei mittels einer Ausrichtarretierung die Ausrichtung arretierbar ist.

16. Fahrzeug nach einem der vorhergehenden Ansprüche, **dadurch gekennzeichnet, dass** unterhalb des Fahrzeugs (4) ein Schacht (19) angeordnet ist, durch den die Spürsonde (2) geführt ist.

17. Fahrzeug nach Anspruch 16, **dadurch gekennzeichnet, dass** der Spürkopf (18) in der Ruhestellung in dem vorzugsweise verschließbaren Schacht (19) angeordnet ist.

18. Fahrzeug nach einem der vorhergehenden Ansprüche, **dadurch gekennzeichnet, dass** mittels einer unter dem Fahrzeug (4) angeordneten Kamera (20) der Spürvorgang über ein Anzeigegerät beobachtbar ist.

## Claims

1. Vehicle (4) containing a tracking device (1) for ground tracking purposes from the interior of the vehicle (4) with a tracking probe (2) that can be brought into contact with the ground, that contains a sensing head (18), that contains a heating element for volatilizing a ground sample **characterized in that** the vehicle (4) comprises a handle (3) configured for moving the tracking probe (2) from a position of rest in a lowered ground tracking position, **in that** the sensing head (18) can be brought into contact with the ground and **in that** the tracking probe (2) passes through the floor (28) of the vehicle interior.

2. Vehicle according to Claim 1 above, **characterized in that** the tracking probe (2) is connected to the handle (3) in such a way that when the handle (3) is activated, the tracking probe (2) can be lowered into the ground tracking position by means of the leverage effect.

3. Vehicle according to Claim 1 or 2 above, **characterized in that** the handle (3) is in the form of a rocker system.

4. Vehicle according to any of the above claims, **characterized in that** the handle (3) can be connected in a swivelling manner, in particular by a ball and socket joint (5), to the tracking probe (2).

5. Vehicle according to any of the above claims, **characterized in that** the handle (3) comprises a lever (6, 8) and a lever bearing (7).

6. Vehicle according to Claim 5 above, **characterized in that** the lever (6, 8) is a single-handed pulling lever.

7. Vehicle according to Claim 5 or 6, **characterized in that** the lever bearing (7) can be connected by means of a supporting bearing structure (9) to the vehicle.

8. Vehicle according to Claim 7 above, **characterized in that** the supporting bearing structure (9) is so designed that, in order to align the tracking probe (2), the tracking probe (2) can be made to swivel around an essentially horizontal swivelling plane.

9. Vehicle according to Claim 8 above, **characterized in that** the supporting bearing structure (9) includes a pivot bearing (10) having a substantially vertical axis of rotation.

10. Vehicle according to Claim 8 or 9, **characterized in that** the supporting bearing structure (9) includes an essentially horizontal linear guide (11).

11. Vehicle according to any of the above claims, **characterized in that** the lowering movement of the tracking probe (2) can be arrested by a lowering arrester device (12).

12. Vehicle according to Claim 11 above, **characterized in that** the lowering arrester device (12) comprises a perforated plate (14), into which a bolt (13) connected to the handle (3) can engage for the purpose of arresting.

13. Vehicle according to Claim 11 or 12, **characterized in that** the lowering arrester device (12) is adapted to be released by means of a lowering release actuation mechanism disposed on the handle (3).

14. Vehicle according to any of the above claims, **characterized in that** the position of rest and/or the ground tracking position and/or the air tracking position and/or the head change position can be sensed by means of a sensor.

15. Vehicle according to any of the above claims, **characterized in that** by means of the handle (3), to be aligned the tracking probe (2) can be swivelled in an essentially horizontal swivelling plane, whereby by means of an alignment arrester device the alignment can be arrested.

16. Vehicle according to any of the above claims, **characterized in that** a compartment (19) is disposed below the vehicle (4), through which the tracking probe (2) is guided.

17. Vehicle according to Claim 16, **characterized in that** in the position of rest the sensing head (18) is arranged in the preferably closable compartment (19).

18. Vehicle according to any of the above claims, **characterized in that** by means of a camera (20) disposed below the vehicle (4) the tracking process is observable via a display device.

## Revendications

1. Véhicule (4) comprenant un dispositif de détection (1) pour des détections du sol depuis l'intérieur du véhicule (4), comprenant une sonde de détection (2) pouvant être amenée en contact avec le sol, laquelle possède une tête de détection (18) qui comporte un élément chauffant destiné à l'évaporation d'un échantillon de sol, **caractérisé en ce que** le véhicule (4) possède une manette (3) destinée au déplacement de la sonde de détection (2) d'une position de repos en une position de détection du sol descendue, **en ce que** la tête de détection (18) pouvant être amenée en contact avec le sol et **en ce que** la sonde de détection (2) est guidée à travers le plancher (28) de l'espace intérieur du véhicule.

2. Véhicule selon la revendication 1, **caractérisé en ce que** la sonde de détection (2) est couplée à une manette (3) de telle sorte que lors de l'actionnement de la manette (3), la sonde de détection (2) descend, sous l'effet de levier, dans la position de détection du sol.

3. Véhicule selon la revendication 1 ou 2, **caractérisé en ce que** la manette (3) est réalisée en forme de bascule.

4. Véhicule selon l'une des revendications précédentes, **caractérisé en ce que** la manette (3) est couplée à la sonde de détection (2) en mobilité pivotante, notamment par le biais d'une rotule (5).

5. Véhicule selon l'une des revendications précédentes, **caractérisé en ce que** la manette (3) comprend un levier (6, 8) et un palier de levier (7).

6. Véhicule selon la revendication 5, **caractérisé en ce que** la manette (3) comprend un levier de traction à une main (8).

7. Véhicule selon la revendication 5 ou 6, **caractérisé en ce que** le palier de levier (7) peut être relié au véhicule par le biais d'un dispositif à palier d'appui (9).

8. Véhicule selon la revendication 7, **caractérisé en ce que** le dispositif à palier d'appui (9) est configuré de telle sorte que pour l'orientation de la sonde de détection (2), des mouvements de pivotement de la sonde de détection (2) peuvent être exécutés autour d'un plan de pivotement sensiblement horizontal.

9. Véhicule selon la revendication 8, **caractérisé en ce que** le dispositif à palier d'appui (9) comprend un palier de rotation (10) ayant un axe de rotation notamment sensiblement vertical.

10. Véhicule selon la revendication 8 ou 9, **caractérisé en ce que** le dispositif à palier d'appui (9) comprend un guide linéaire (11) notamment sensiblement horizontal.

11. Véhicule selon l'une des revendications précédentes, **caractérisé en ce que** le mouvement de descente de la sonde de détection (2) peut être bloqué au moyen d'un dispositif de blocage de la descente (12).

12. Véhicule selon la revendication 11, **caractérisé en ce que** le dispositif de blocage de la descente (12) comprend un obturateur à trou (14) dans lequel un goujon (13) relié à la manette (3) vient en prise en vue du blocage.

13. Véhicule selon la revendication 11 ou 12, **caractérisé en ce que** le dispositif de blocage de la descente (12) peut être libéré au moyen d'un actionneur de libération du blocage de la descente (15) disposé sur la manette (3).

14. Véhicule selon l'une des revendications précédentes, **caractérisé en ce que** la position de repos et/ou la position de détection du sol et/ou la position de détection de l'air et/ou la position de changement de tête peuvent être détectées au moyen d'un capteur.

15. Véhicule selon l'une des revendications précédentes, **caractérisé en ce que** la sonde de détection (2) peut être pivotée au moyen de la manette (3) en vue de son orientation autour d'un plan de pivotement sensiblement horizontal, l'orientation pouvant être bloquée au moyen d'un dispositif de blocage de l'orientation.

16. Véhicule selon l'une des revendications précédentes, **caractérisé en ce qu'**un sas (19) à travers lequel est guidé la sonde de détection (2) est disposé au-dessous du véhicule (4).

17. Véhicule selon la revendication 16, **caractérisé en ce que** la tête de détection (18) en position de repos est disposée dans le sas (19) qui peut de préférence être fermé.

18. Véhicule selon l'une des revendications précédentes, **caractérisé en ce que** l'opération de détection peut être observée par le biais d'un appareil d'affichage au moyen d'une caméra (20) disposée sous le véhicule (4).
